(19) Europäisches Patentamt
European Patent Office
Office européen des brevets

(11) **EP 4 697 029 A1**

(12) **EUROPEAN PATENT APPLICATION**

(43) Date of publication:
**18.02.2026 Bulletin 2026/08**

(21) Application number: **25184143.3**

(22) Date of filing: **20.06.2025**

(51) International Patent Classification (IPC):
**G01P 5/165** (2006.01)   **G01P 5/16** (2006.01)
**G01P 5/02** (2006.01)   **B64D 43/02** (2006.01)
**G01P 5/04** (2006.01)

(52) Cooperative Patent Classification (CPC):
**G01P 5/165; B64D 43/02; G01P 5/02; G01P 5/16;**
G01P 5/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.08.2024 US 202418804638**

(71) Applicant: **The Boeing Company**
**Arlington, VA 22202 (US)**

(72) Inventor: **WEBB, Sean Christian**
**Arlington, 22202 (US)**

(74) Representative: **Boult Wade Tennant LLP**
**Salisbury Square House**
**8 Salisbury Square**
**London EC4Y 8AP (GB)**

(54)   **PITOT-STATIC INSTRUMENT TO DETERMINE AIRSPEED FOR AN AIRCRAFT**

(57)   A pitot system includes a body including an inlet port and a hermetically sealed chamber positioned in the body. The hermetically sealed chamber includes a movable barrier in fluid communication with the inlet port. The pitot system also includes one or more first sensors configured to provide first signals, to a computer, based on deflection of the movable barrier due to impact pressure exerted against the movable barrier by fluid in the body. The first signals correspond to a stagnation pressure of fluid that entered the body via the inlet port.

FIG. 2

FIG. 3

EP 4 697 029 A1

**Description**

FIELD OF THE DISCLOSURE

The present disclosure is generally related to a pitot-static instrument to determine airspeed for an aircraft.

BACKGROUND

Fluid flow speed is often measured using a pitot-static instrument. For example, pitot-static instruments can be used to determine the airspeed of an aircraft, the water speed of a watercraft, and flow velocities of fluids in conduits. The pitot-static instrument includes a pitot tube to detect stagnation pressure (i.e., total pressure) and a static pressure system to detect static pressure. Dynamic pressure is the difference between the stagnation pressure and the static pressure. The dynamic pressure is related to fluid flow speed through Bernoulli's equation for an incompressible fluid, and the fluid flow speed ($u$) at subsonic speeds is:

$$u = \sqrt{\frac{2(P_T - P_S)}{\rho}} \qquad \text{(Equation 1)}$$

where $P_T$ is the stagnation pressure, $P_S$ is the static pressure, and $\rho$ is the fluid density. At supersonic speeds a generated shock wave changes the stagnation pressure, and corrections can be applied to adjust the equation presented above.
The pitot tube of a pitot-static instrument includes an inlet port positioned directly into the fluid flow to direct fluid into a chamber and a conduit that extends from the chamber to a first sensor device (e.g., a pressure sensor, a first inlet of a differential pressure transducer, a first inlet of a manometer, etc.). The conduit has one or more openings in the chamber and no outlet, which allows the fluid to stagnate in the conduit. In some examples, the chamber and the conduit are a single, integral unit and the inlet port is the one or more openings of the conduit. In some other examples (e.g., the pitot tube of an aircraft), a portion of the conduit is positioned in the chamber. The conduit may include a baffle near the one or more openings to inhibit foreign object debris (FOD) from entering the conduit. The FOD may include particulate matter, water as liquid or ice, matter from a bird strike, one or more insects or pieces of an insect, other material, or combinations thereof. The chamber may include one or more exit ports to enable certain types of FOD to exit the chamber (e.g., liquid water). For aircraft pitot-static instruments, the pitot tube includes one or more heaters to melt ice particles entrained in the fluid (e.g., air), to prevent ice formation or deposition on walls of the chamber, to prevent ice formation in a heated portion of the conduit, or combinations thereof.
The static pressure system may be integral with the pitot tube (e.g., the pitot-static instrument is a Prandtl tube) or separate from the pitot tube. The static pressure system includes one or more static ports that do not receive fluid flow (e.g., one or more ports located perpendicular to, or at an obtuse angle to, a direction of the fluid flow). A conduit connects the one or more static ports to a second sensor device or to a second inlet of the first sensor device. Output of the first sensor device, the second sensor device, or both, are used to determine the dynamic pressure and the fluid flow speed.
An aircraft typically uses pitot-static instruments to determine airspeed. Aircraft typically include a plurality of pitot-static instruments for redundancy. For aircraft operable by a pilot and/or a copilot, a first pitot-static instrument of the plurality of pitot-static instruments is utilized to provide airspeed information to the pilot, and an independent second pitot-static instrument of the plurality of pitot-static instruments is utilized to provide airspeed information to the copilot. When the aircraft is not in use or being prepared for use, covers placed on the pitot-static instruments inhibit FOD from entering ports of the pitot-static instruments.
Aircraft pitot-static instruments are often coupled to nacelles to position the inlet ports a distance away from the aircraft so that the inlet ports are in free stream air during flight and avoid boundary layer effects or turbulent airflow caused by the aircraft. Aircraft pitot-static instruments are configured to function at air temperatures ranging from air temperatures at ground level (e.g., -55 degrees Celsius to 50 degrees Celsius) to air temperatures at high altitudes (e.g., temperatures from -40 degrees Celsius to -80 degrees Celsius at altitudes from 9000 to 12000 meters).
A tip of a pitot-static instrument with an inlet port typically includes a hemispherical tip. A ratio of a diameter of the inlet port to a diameter of the conduit is typically between 0.1 and 0.2. The ratio of the inlet port diameter to the conduit diameter is proportional to a loss of contribution to the stagnation pressure due to movement of the air (e.g., wind) when an incident angle of the pitot tube to a direction of the movement of the air is not zero. For example, the pressure contribution due to wind to the stagnation pressure of a pitot tube with an inlet diameter to tube diameter ratio of 0.1 is zero or substantially zero at incident angles greater than 2.5 degrees.
Each aircraft pitot-static instrument may be susceptible to malfunction due to blockage of the inlet port, blocking of the conduit due to entry of FOD or ice formation in unheated portions of the conduit, or combinations thereof. For example, if the blockage blocks the inlet port and at least one exit port remains open, the measured stagnation pressure will be the static pressure and the malfunction will cause the airspeed indicator to indicate an airspeed of zero. As another example, if the blockage blocks the conduit, or the inlet port and the exit ports, the air in the conduit is trapped and the airspeed indicator will react as an altimeter and will not provide an indication of change in the airspeed. It is desirable to have a pitot-static instrument that is not susceptible to malfunction like a conventional pitot-static instrument.

SUMMARY

In one example, a pitot system includes a body including an inlet port and a hermetically sealed chamber positioned in the body. The hermetically sealed chamber includes a movable barrier in fluid communication with the inlet port. The pitot system also includes one or more first sensors configured to provide first signals, to a computer, based on deflection of the movable barrier due to impact pressure exerted against the movable barrier by fluid in the body to a computer. The first signals correspond to a stagnation pressure of fluid that entered the body via the inlet port.

In another example, an aircraft includes a fuselage. The aircraft includes a first nacelle coupled to the fuselage. The aircraft includes a pitot system coupled to the first nacelle. The pitot system includes a body and a hermetically sealed chamber coupled to the body. An inlet port in the body is in fluid communication with a movable barrier of the hermetically sealed chamber. One or more first sensors configured to generate first signals corresponding to impact pressure exerted on the movable barrier are coupled to the movable barrier. The aircraft also includes a computer configured to receive the first signals from the one or more first sensors.

In another example, a method to enable determination of airspeed of an aircraft includes causing, by motion of an aircraft relative to air, the air to exert an impact pressure against a movable barrier of a hermetically sealed chamber positioned in a body of a pitot system. The method includes generating, via one or more first sensors of the aircraft, first signals based on deflection of the movable barrier due to the impact pressure. The first signals correspond to stagnation pressure of the pitot system. The method also includes determining, via one or more processors of the aircraft, an indicated airspeed of the aircraft based on the first signals and based on second signals from a static pressure system.

The features, functions, and advantages described herein can be achieved independently in various examples or may be combined in yet other examples, further details of which can be found with reference to the following description and drawings.

BRIEF DESCRIPTION OF THE DRAWINGS

FIG. 1 is a block diagram illustrating a portion of an aircraft that includes pitot-static instruments usable to determine airspeed of the aircraft.
FIG. 2 is a cross-sectional representation of a first example of a pitot system, such as the pitot system of FIG. 1.
FIG. 3 is a cross-sectional representation of a second example of a pitot system, such as the pitot system of FIG. 1.
FIG. 4 is a perspective representation of a pitot-static instrument.
FIG. 5 is a cross-sectional representation of the pitot system of FIG. 4 taken substantially along the cutting plane 5-5 of FIG. 4.
FIG. 6 is a flowchart of an example of a method of use of a pitot-static instrument to determine airspeed for an aircraft.
FIG. 7 is a flowchart illustrating an example of a life cycle of an aircraft that includes pitot-static instruments.
FIG. 8 is a block diagram illustrating features of an illustrative aircraft that includes pitot-static instruments.
FIG. 9 is a block diagram of a computing environment including a computing device configured to support features of computer-implemented methods and computer-executable program instructions (or code) according to the present disclosure.

DETAILED DESCRIPTION

A pitot system of the present disclosure includes a hermetically sealed chamber with a movable barrier that enables determination of stagnation pressure and airspeed of air, or speed of another a fluid, relative to the pitot system. Stagnation pressure in the pitot system is determined by one or more sensors based on deflection of the movable barrier. The air is conveyed to the movable barrier through an inlet port in a tip section of the pitot system, and the sensor(s) convert the deflection of the movable barrier to signals that correspond to the stagnation pressure of the pitot system. The tip section includes one or more exit ports.

The sensor(s) detect changes in position of the movable barrier as changes in resistance (e.g., the sensors are strain gauges coupled to the movable membrane in a Wheatstone bridge configuration), changes in capacitance, changes to optical properties (e.g., change in phase between light that has taken two different paths), changes in force (e.g., force applied to a strain gauge by a mass-spring-dampener system connected to the movable barrier), or changes to other properties, and provide electrical signals corresponding to the changes to an air data computer of the aircraft. The movable barrier may be a diaphragm made of an elastic material (e.g., an elastomer, a ceramic, or a metal) configured to deflect from an initial position responsive to sufficient impact pressure against the movable barrier and return toward the initial position when the impact pressure is reduced. In some examples where the movable barrier is coupled to a mechanism that provides a force that returns the movable barrier toward an initial position after deflection (e.g., a mass-spring-dampener system), the movable barrier may be a rigid surface for high robustness against environmental factors and fatigue, or the movable barrier may be a diaphragm made of an elastic material.

The inlet port in the tip section of the pitot device may have a small opening or a large opening compared to a size of the movable barrier subject to impact by the air. A ratio of the diameter of the inlet port to a diameter of the movable barrier may be a particular value between about 0.1 and 1, or between 0.1 and 1. A particular ratio is selected during design of the tip section. A small ratio may reduce chances of FOD entering the inlet port of the pitot system. A large opening may reduce cutoff of pressure contribution to stagnation pressure due to air movement. Cutoff of pressure contribution occurs near a particular incident angle (e.g., about 2.5 degrees for a ratio of 0.1 to about 25 degrees for a ratio of 1, or 2.5 degrees for a ratio of 0.1 to 25 degrees for a ratio of 1).

The tip section includes a skin effect heater, resistance heater coupled to the tip section, or other type of heater. The heater inhibits icing in the tip section and maintains a temperature of the movable barrier within an operational temperature range (e.g., a temperature range where elasticity of the movable barrier has little or no dependence on temperature). Liquid water produced by melting ice is able to leave the tip section through one or more exit ports.

A technical advantage of the pitot system is that the stagnation pressure is determined by deflection of a movable barrier in a tip section of the pitot system. Having the movable barrier in the tip section instead of having a conduit in fluid communication with a pressure sensor reduces locations where FOD or icing can cause blockage and malfunction of the pitot device. Another technical advantage of the pitot system is that the pitot system continues to function even when FOD enters the inlet port and is positioned against the movable barrier because air entering the inlet port will impact the FOD and the FOD deflects the movable barrier an amount that corresponds or substantially corresponds to the stagnation pressure. This enables the inlet port to have a large size that avoids loss of air movement contribution to the stagnation pressure at even small angles of attack.

Another technical advantage for aircraft that utilize both the pitot system and a conventional pitot tube that includes a conduit in fluid communication with a pressure sensor is that the two types of instruments decrease a likelihood, by orders of magnitude, of both the pitot device and the conventional pitot tube failing during a flight since the instruments utilize different energy mechanisms as stimulus (e.g., deflection of the movable barrier for the pitot system and fluid communication between the inlet port and a pressure sensor for the conventional pitot tube. The availability of output from one or more pitot systems and one or more conventional pitot tubes improves pilot situational awareness.

The figures and the following description illustrate specific examples. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific examples described below, but by the claims.

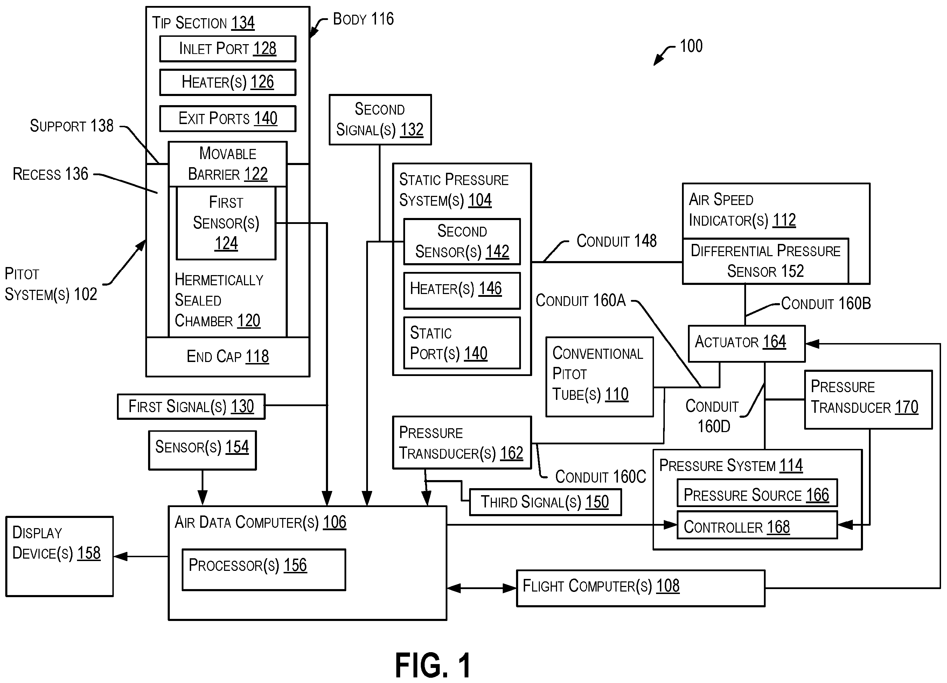

Particular examples are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1, multiple conduits 160 are illustrated and associated with reference numbers 160A-160D. When referring to a particular conduit, such as the conduit 160A, the distinguishing letter "A" is used. However, when referring to any arbitrary conduit, or to the conduits as a group, the reference number 160 is used without a distinguishing letter.

As used herein, various terminology is used for the purpose of describing particular examples only and is not intended to be limiting. For example, the singular forms "a," "an," and "the" are intended to include the plural forms as well, unless the context clearly indicates otherwise. Further, some features described herein are singular in some examples and plural in other examples. For ease of reference herein, such features are generally introduced as "one or more" features and may subsequently be referred to in the singular or optional plural (as typically indicated by "(s)") unless features related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, and should not be construed as limiting or as indicating a preference or a preferred example. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some examples, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

The term "substantially" is defined as largely but not necessarily wholly what is specified (and includes what is specified; for example, substantially 90 degrees includes 90 degrees and substantially parallel includes parallel), as understood by a person of ordinary skill in the art. In any disclosed examples, the term "substantially" may be substituted with "within [a percentage] of" what is specified, where the percentage includes 0.1, 1, 5, or 10 percent; and the term "approximately" may be substituted with "within 10 percent of" what is specified. The statement "substantially X to Y" has the same meaning as "substantially X to substantially Y," unless indicated otherwise. Likewise, the statement "substantially X, Y, or substantially Z" has the same meaning as "substantially X, substantially Y, or substantially Z," unless indicated otherwise.

FIG. 1 is a block diagram illustrating a portion of an aircraft 100 that includes pitot-static instruments usable to determine airspeed of the aircraft. A pitot-static instrument includes a first device configured to indicate stagnation pressure and a second device configured to indicate static pressure. The aircraft 100 includes one or more pitot systems 102, one or more static pressure systems 104, one or more air data computers 106 (e.g., an air data and inertial reference unit), and one or more flight computers 108. In some examples, the aircraft 100 also includes one or more conventional pitot tubes 110 and one or more airspeed indicators 112. Each airspeed indicator 112 operates based on stagnation pressure received from one of the conventional pitot tube(s) 110 or stagnation pressure received from a pressure system 114, and static pressure received from one of the static pressure system(s) 104. In some examples, one or more of the static pressure system(s) 104 are separate from the pitot system(s) 102, the conventional pitot tube(s) 110, or both. In some other examples, one or more of the static pressure systems 104 are integrated with corresponding pitot system(s) 102 or conventional pitot tube(s) 110.

Each pitot system 102 includes a body 116, an end cap 118 for the body 116, a hermetically sealed chamber 120 having a movable barrier 122, one or more first sensors 124 coupled to the movable barrier 122, one or more first sensors 124, and one or more heaters 126. Each pitot system 102 is connected to the aircraft 100 by a nacelle that positions an inlet port 128 of the pitot system 102 in free stream air when the aircraft 100 is in flight.

Electrical wiring of each pitot system(s) 102 (e.g., wiring for the first sensor(s) 124 and wiring for the heater(s) 126) passes through the corresponding nacelle and is electrically coupled to a power system of the aircraft 100 and to a corresponding air data computer 106. The electrical wiring of each pitot system 102 provides power to the pitot system 102 from the power system of the aircraft 100 and provides first signal(s) 130 corresponding to stagnation pressure, second signals 132 corresponding to static pressure, or both, to the corresponding air data computer 106. In some pitot system examples, one or more releasable connectors connect the electrical wiring of the pitot system 102 to wiring of the aircraft 100 to facilitate removal of the hermetically sealed chamber 120 from the body 116 of the pitot system 102 to enable cleaning of the body 116, to enable cleaning of the movable barrier 122, to enable calibration of the first sensor(s) 124, to simplify replacement of the hermetically sealed chamber 120, or combinations thereof. In some other examples, a calibration device can be removably coupled to the body 116 of a particular pitot system 102 and a calibration process can be implemented to apply known pressures to the particular pitot system 102 to calibrate the first sensor(s) 124 of the particular pitot system 102 without a need to remove the hermetically sealed chamber 120 from the body 116.

The body 116 includes a tip section 134 and a recess 136 to receive the hermetically sealed chamber 120. The end cap 118 is threaded, or otherwise secured, to the body 116 to secure the hermetically sealed chamber 120 in the recess 136. The body 116 includes a support 138 configured to couple to a portion of the hermetically sealed chamber 120. In some examples, a seal (e.g., threading, one or more O-rings, other types of seals, or combinations thereof) between the support 138 and the portion of the hermetically sealed chamber 120 prevents air entering the pitot system 102 through the inlet port 128 during flight of the aircraft 100 from flowing past the support 138. In some examples, the movable barrier 122 of the hermetically sealed chamber 120 is located past the support 138 in the tip section 134 of the body 116. In some other examples, the movable barrier 122 is not located past the support 138.

In some examples, there are one or more annular spaces between the hermetically sealed chamber 120 and the body 116 and the annular space(s) include end walls. The end walls may include the support 138, the end cap 118, one or more separately formed walls, or combinations thereof. In some examples, a portion of wiring for the pitot system 102 resides in the annular space(s). In some examples, one or more static ports 140 of integrated static pressure system(s) 104 are openings in the body 116 that enable outside air to enter the annular space(s) and the annular space(s) are in fluid communication with second sensor(s) 142 of the integrated static pressure system(s) 104 via one or more exit ports from the annular space(s).

The tip section 134 of the body 116 includes the inlet port 128. When the aircraft 100 is in flight, air entering the inlet port 128 impacts the movable barrier 122 of the hermetically sealed chamber 120 and deflects the movable barrier 122. In some examples, the inlet port 128 is an opening that extends from an end of the tip section 134 to, or proximate to, the movable barrier 122. In some examples, the tip section 134 has a hemispherical or other curved shape that transitions to a constant or substantially constant outer diameter cylindrical shape. In some other examples, the tip section 134 is a cylindrical tube with a constant or substantially constant outer diameter and constant or substantially constant inner diameter. In still some other examples, the inlet port 128 is a cylindrical or other shape through a wall of a hemispherical or other shape, and the tip is connected to, or an extension of, a tube that extends toward the movable barrier 122.

In some examples, the tip section 134 of the body 116 includes one or more exit ports 144, and in some other examples, the tip section 134 of the body does not include exit port(s). The exit port(s) 144 enable FOD (e.g., particulate matter, liquid water, and ice particles) that enters, or forms in the tip section 134 (e.g., liquid water produced by melting ice formed or deposited on walls of the tip section 134 or the movable barrier 122), to exit the tip section 134. The exit port(s) 144 are located between the inlet port 128 and the movable barrier 122 of the hermetically sealed chamber 120, between the movable barrier 122 and the support 138 when the movable barrier 122 extends into the tip section 134, or combinations thereof.

During flight of the aircraft 100, air is in communication with the movable barrier 122 via the inlet port 128. In some pitot system examples where the body 116 of the pitot system 102 includes one or more exit ports 144, air enters the inlet port 128 and a portion of the air in the body 116 exits the body 116 through the exit port(s) 144. Air entering the body 116 through the inlet port 128 directly or indirectly exerts an impact pressure against the movable barrier 122. In some pitot system examples where the body 116 of the pitot system 102 does not include an exit port 144, or during use of a pitot system 102 with exit port(s) 144 that are blocked, air at the inlet port 128, which may or may not enter the inlet port 128, exerts an impact pressure against the movable barrier 122 indirectly through air in the body 116 or FOD positioned against the movable barrier 122. The impact pressure exerted against the movable barrier 122 corresponds to the stagnation pressure of the pitot system 102.

The hermetically sealed chamber 120 is positioned in the recess 136 of the body 116 and secured to the body 116 at the support 138 and by the end cap 118. The hermetically sealed chamber 120 is a closed system and changes (e.g., pressure changes) to the closed system cause deflection of the movable barrier 122. The first sensor(s) 124 are coupled to the movable barrier 122 and detect position of the movable barrier 122. The first sensor(s) 124 send output signals to a corresponding air data computer 106. The air data computer 106 converts the output signals to pressure readings that correspond to the static pressure, or wind speed, when the aircraft 100 is not in motion, and that correspond to the stagnation pressure when the aircraft 100 is in motion.

The heater(s) 126 are skin effect heaters, resistance heaters (e.g., a heating coil), other types of heaters, or combinations thereof. The heater(s) 126 are configured to maintain the movable barrier 122 in an operating temperature range where elasticity of the movable barrier 122 is independent or substantially independent of temperature, to heat the tip section 134 to melt ice that forms on, or is deposited on, walls of the tip section 134 or the movable barrier 122, or combinations thereof. In some pitot system examples that include integrated static pressure system(s) 104, the heater(s) 126 also heat the static ports 140 of the static pressure system(s) 104 to inhibit icing over of the static ports 140.

The heater(s) 126 are activated by an operator of the aircraft 100 using a switch on a control panel or other input device, are automatically activated during flight by the flight computer(s) 108, or both. The heater(s) 126 are designed to maintain the tip section 134 above an ice formation temperature when the aircraft 100 is in flight. In some examples, the flight computer(s) 108 adjust power supplied to the heater(s) based on a flight phase of the aircraft 100. For example, the flight computer(s) 108 cause more power to be supplied to the heater(s) 126 when the aircraft 100 is in motion (e.g. in flight or taxiing) as opposed to when the aircraft 100 is not in motion to compensate for additional heat transfer by forced convection due to motion of the aircraft 100 through the air.

Each static pressure system 104 includes the static port(s) 140, one or more second sensors 142, one or more heaters 146, or combinations thereof. The static ports 140 are in fluid communication with the second sensor(s) 142 via one or more conduits 148. For example, a particular static pressure system 104 is connected by the conduit 148 to a particular airspeed indicator 112. As another example, when a particular pitot system 102 includes an integrated static pressure system 104, the conduit 148 is connected to an exit port from an annular space that receives outside air through the static port(s) 140 and to the second sensor(s) 142 (e.g., a pressure transducer that that provides the second signals 132 to a corresponding air data computer 106). Each of the second sensor(s) 142 of a static pressure system 104 is a pressure sensor such as a differential pressure sensor 152 of a particular airspeed indicator 112 or a pressure transducer (e.g., an air data module) that provides the second signals 132 corresponding to static pressure to a corresponding air data computer 106. In some examples, at least one of the static pressure systems 104 can be connected to an alternate static pressure source with static ports 140 located within a fuselage of the aircraft 100. The alternate static pressure source is selectable by pilot input.

The heater(s) 146 prevent icing over of the static ports 140. In some examples where a particular static pressure system 104 is integrated with a particular pitot system 102, the heater(s) 146 include the heater(s) 126 of the particular pitot system 102.

The air data computer(s) 106 receive signals as data. The data received by a particular air data computer 106 includes the first signals 130 from the one or more of the pitot system(s) 102, the second signals 132 from one or more of the static pressure system(s) 104, one or more third signals 150 from one or more of the conventional pitot tube(s) 110, signals from one or more sensor(s) 154, or combinations thereof. In some examples, the air data computer(s) 106 are line replaceable units (LRUs) electronically coupled to one or more of the flight computer(s) 108. The one or more sensor(s) 154 include one or more air temperature sensors (e.g., outside air temperature sensors), one or more angle-of-attack sensors, one or more accelerometers, other sensors, or combinations thereof. The air data computer(s) 106 include one or more processors 156 configured to analyze the received data to determine flight conditions including altitude, attitude, indicated airspeed, static air temperature, true airspeed, mach number, angle of attack, etc. The air data computer(s) 106 cause the flight conditions to be displayed to one or more display devices 158 and the air data computer(s) 106 send flight conditions data to the flight computer(s) 108. The flight computer(s) 108 are configured to control the aircraft 100 based on one or more of the flight conditions. For example, an engaged autopilot system can adjust the airspeed of the aircraft in response to indicated airspeed, in the flight conditions data, satisfying one or more conditions.

Each air data computer 106 receives the second signal(s) 132 corresponding to static pressure from one or more of the static pressure systems 104; the first signal(s) 130 corresponding to stagnation pressure from one or more pitot systems 102; the third signal(s) 150 corresponding to stagnation pressure from one or more conventional pitot tube(s) 110, or combinations thereof; and determines the indicated airspeed. The air data computer(s) 106 apply corrections to the indicated airspeed so that the pitot system(s) 102 and conventional pitot tube(s) 110 are usable for both subsonic aircraft and supersonic aircraft. In some air data computer examples, inputs to an air data computer 106 include stagnation pressure from one or more of the conventional pitot tubes 110 via conduit(s), static pressure from one or more of the static pressure systems 104 via conduit(s), or both.

The flight computer(s) 108 are configured to facilitate operation of the aircraft 100 based on pilot input, autopilot system commands, and flight conditions based on sensor data. The flight computer(s) 108 analyze the flight conditions data received from the air data computer(s) 106 to determine if there is an anomaly associated with any of the pitot system(s) 102, the static pressure system(s) 104, and conventional pitot tube(s) 110. The flight computer(s) 108 perform one or more actions if there is an anomaly. For example, if a value of indicated airspeed determined by data from a particular conventional pitot tube 110 becomes zero during a flight, the flight computer(s) 108 determine there is an anomaly, provide an alert to the pilots of the aircraft 100, cause displays that previously provided airspeed information based on the particular conventional pitot tube 110 to utilize a source other than the particular conventional pitot tube 110, provide a different source to an airspeed indicator 112 if the particular conventional pitot tube 110 is in fluid communication with the airspeed indicator 112, perform other actions, or combinations thereof. As another example, if a ratio of the airspeed information based on pressure data from a first pitot system 102 to the airspeed information provided by another pitot system 102 or conventional pitot tube 110 is outside of a particular range for a threshold period of time, the flight computer(s) 108 provides an alert to the pilots.

Each conventional pitot tube 110 directs air through one or more conduits 160 to one or more pressure sensors (e.g., pressure transducer(s) 162). Each conventional pitot tube 110 includes an inlet port, one or more exit ports, one or more heaters to inhibit icing over of the inlet port and the exit port(s), and the one or more conduits 160 in fluid communication with the one or more pressure sensors. For example, a particular conventional pitot tube 110 is coupled to a differential pressure sensor 152 of one of the airspeed indicators 112 by the conduits 160A, 160B and is coupled to one of the pressure transducer(s) 162 by the conduit 160C. Each of the pressure transducer(s) 162 provide signals indicative of stagnation pressure associated with a corresponding conventional pitot tube 110 to a corresponding air data computer 106.

The conventional pitot tube(s) 110 can be one or more legacy pitot tubes of the aircraft 100, can be installed on the aircraft 100 so that the aircraft 100 has multiple redundant instruments to provide data (e.g., signals indicative of stagnation pressure) used to determine airspeed that use different energy mechanisms as stimulus, or both. The conventional pitot tubes 110 are coupled by the conduits 160 to one or more pressure sensors (e.g., one of the pressure transducer(s) 162, a differential pressure sensor 152 of one of the airspeed indicator(s) 112, or both). The stimulus for a conventional pitot tube 110 is air in the conduit(s) 160 from the inlet port of the conventional pitot tube 110 to the pressure sensor(s). The pitot systems 102 include hermetically sealed chambers 120 with movable barriers 122. The movable barrier 122 of each pitot system 102 is located near the inlet port 128 and air exerts an impact pressure against the movable barrier 122 due to movement of the aircraft 100 (e.g., flight of the aircraft 100). The impact pressure deflects the movable barrier 122 when airspeed of the aircraft 100 changes. The first sensor(s) 124 convert deflection of the movable barrier 122 to the first signals 130, which are indicative of the stagnation pressure of the pitot system 102 and provide the first signals 130 to one of the air data computer(s) 106. The stimulus for a pitot system 102 is impact pressure against the movable barrier 122 caused by air at, or entering, the inlet port 128, which is different than the stimulus for one of the conventional pitot tubes 110, which is air in the conduit(s) 160 from the inlet ports to the corresponding pressure sensor(s).

Each airspeed indicator 112 is a flight instrument that outputs an indicated airspeed of the aircraft 100. The indicated airspeed is not corrected for actual air density; compressibility errors due to speeds near, at, or above the speed of sound; additional known errors; or combinations thereof. Each airspeed indicator 112 includes the differential pressure sensor 152 that receives stagnation pressure at a first inlet via particular conduits 160, static pressure from a static pressure system 104 at a second inlet via the conduit 148, and includes a mechanism coupled to the differential pressure sensor 152 to generate a visual indication of airspeed.

In some examples, one or more of the airspeed indicator(s) 112 are coupled to multiple stagnation pressure sources so that the airspeed indicator 112 provides airspeed output in the event of failure of one of the stagnation pressure sources. For example, an output of an actuator 164 is coupled to the differential pressure sensor 152 by the conduit 160B. A first inlet of the actuator 164 is connected to a particular conventional pitot tube 110 by the conduit 160A. A second inlet of the actuator 164 is connected to the pressure system 114 by the conduit 160D from the pressure system 114.

The pressure system 114 includes a pressure source 166 and a controller 168. In some examples, the pressure source 166 is a cylinder, piston, and motor system, where the motor is connected to the piston to control the position of the piston. The cylinder is connected to the conduit 160D to form a closed system between the differential pressure sensor 152 and the piston when the actuator 164 connects the conduit 160D to the conduit 160B. When the pressure system 114 is active, the controller 168 receives target pressure signals corresponding to target pressures from one of the air data computers 106 and the actual pressure applied to the differential pressure sensor 152 from a pressure transducer 170. The controller 168 sends control signals to the motor that cause the motor to adjust the position of the piston when needed to change the pressure so that the actual pressure approaches, or is at, a current target pressure. In some other examples, the pressure source 166 is a different type of pressure source than a cylinder, piston, and motor system.

During normal operation of the aircraft 100 the actuator 164 is in a first position so that the first inlet of the differential pressure sensor 152 is in fluid communication with the particular conventional pitot tube 110 via the conduits 160A, 160B. If the flight computer(s) 108 determine that the particular conventional pitot tube 110 is producing anomalous readings, the flight computer(s) 108 generate an alert for the pilots regarding the particular conventional pitot tube 110, and the flight computer(s) 108 cause the actuator 164 to transition to a second position so that the particular conventional pitot tube 110 is not in fluid communication with the differential pressure sensor 152 and the pressure system 114 is in fluid communication with the differential pressure sensor 152 via conduits 160B, 160D.

The flight computer(s) 108 also send one or more control signals to the pressure system 114, one of the air data computers 106 that is electrically coupled to the pressure system 114, or both. The one or more control signals cause activation of the pressure system 114 and cause the air data computer 106 to send the controller 168 the target pressure signals. The target pressure signals correspond to stagnation pressure based on the first signal(s) 130 from one or more of the pitot systems 102, the third signal(s) 150 from one or more of the conventional pitot tubes 110 other than the particular conventional pitot tube 110, or both.

During a flight of the aircraft 100, air enters, or impacts against air at, the inlet ports 128 of the pitot system(s) 102. For each pitot system 102, motion of the aircraft 100 relative to the air causes the air to exert impact pressure against the movable barrier 122 of the hermetically sealed chamber 120 positioned in the body 116 of the pitot system 102. The first sensor(s) 124 generate first signals 130 based on deflection of the movable barrier due to the impact pressure detect the position of the movable barrier 122 and provide an electrical signal to a corresponding air data computer 106. The electrical signal corresponds to the stagnation pressure of the pitot system 102. The air data computer 106 also receives a static pressure signal from a second sensor 142 of one of the static pressure systems 104. Based on the stagnation pressure determined from the electrical signal from the pitot system 102 and the static pressure determined from the static pressure signal, the air data computer 106 determines flight conditions including the airspeed of the aircraft 100. The air data computer 106 provides the flight conditions to the display device(s) 158. The air data computer 106 also provides the flight conditions to the flight computer(s) 108. If the flight computer(s) 108 detect one or more anomalies with airspeed data received from the air data computer(s) 106, the flight computer(s) 108 implement one or more responses to the one or more anomalies.

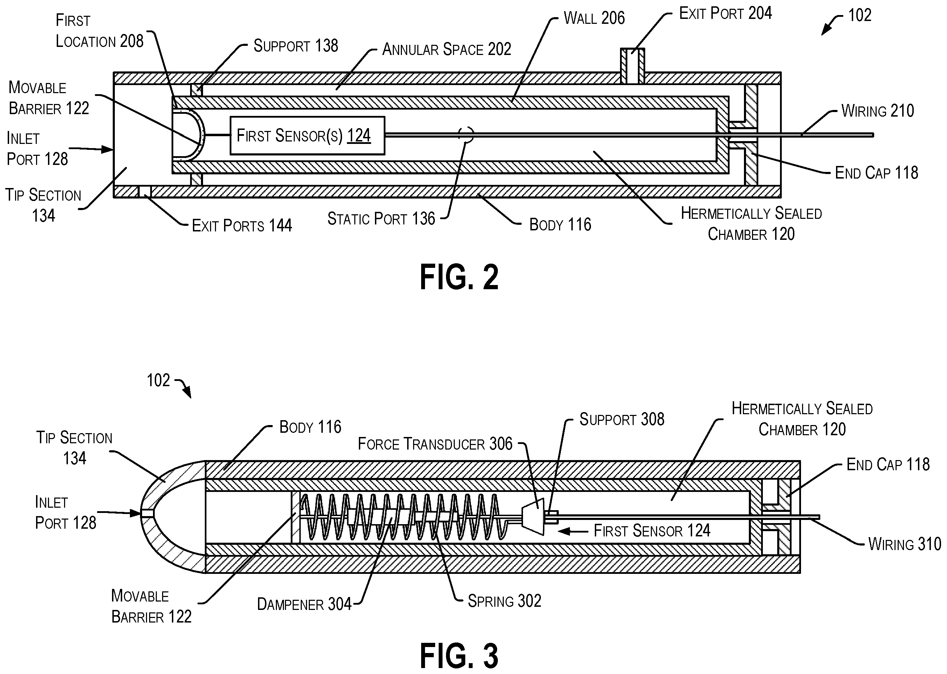

FIG. 2 depicts a cross-sectional representation of a first example of a pitot system, such as the pitot system 102 of FIG. 1. The pitot system 102 of FIG. 2 includes an integrated static pressure system. The pitot system 102 includes the hermetically sealed chamber 120 positioned in the body 116 to form an annular space 202 between the hermetically sealed chamber 120 and the body 116. The hermetically sealed chamber 120 is coupled and sealed to the support 138. The seal between the hermetically sealed chamber 120 and the support 138 prevents air entering the pitot system 102 through the inlet port 128 from entering the annular space 202. The body 116 may include one or more additional supports for the hermetically sealed chamber 120.

In some examples, a second seal is formed between the end cap 118 and the hermetically sealed chamber 120. In some other examples, the end cap 118 is not sealed to the hermetically sealed chamber 120, or includes one or more openings, so that the end cap 118 functions as a static port 140 that allows outside air at the static pressure into the annular space 202. Alternatively, or in addition, the pitot system 102 includes static port(s) 140 through an outer wall of the body 116 to the annular space 202.

The body 116 includes an exit port 204. When the pitot system 102 is coupled to an aircraft, one or more conduits are coupled to the exit port 204 so that the annular space 202 is in fluid communication with one or more pressure sensors that determine the static pressure associated with the pitot system 102. In some examples, the static port(s) 140 are located through one or more sides of the body 116 so that the pressure in the annular space 202 does not have a dynamic pressure component associated with ascent or descent of the aircraft. The body 116 includes one or more exit ports 144 from the tip section 134 of the body 116.

The hermetically sealed chamber 120 includes the movable barrier 122 adhered, fused, mechanically coupled, or otherwise attached to a wall 206 of the hermetically sealed chamber 120 at a first location 208, and the movable barrier 122 is a flexible member. The first location 208 may correspond to a circumferential region of an inner surface of the hermetically sealed chamber 120.

The first sensor(s) 124 are coupled to the movable barrier 122. In some examples, the first sensor(s) 124 may include strain gauges attached to the movable barrier 122 and electronics that receive, amplify, and process signals from the strain gauges to the first signal(s), which correspond to the first signal(s) 130 of FIG. 1, indicative of a position of the movable barrier 122, which is indicative of stagnation pressure of the pitot system 102. The first sensor(s) 124 receive power and send signals through wiring 210 coupled to the first sensor(s) 124. The wiring 210 is sealed by a first seal to the hermetically sealed chamber 120 where the wiring 210 passes into/out of the hermetically sealed chamber 120. In some examples, the first seal is located on an outer surface of a side wall of the hermetically sealed chamber 120, or on an outer surface of an end wall of the hermetically sealed chamber 120. In some other examples, the first seal is formed on an inner surface of the hermetically sealed chamber 120 after placement of the first sensor(s) 124 and electrical connection to the wiring 210, and before the hermetically sealed chamber 120 is sealed. When the wiring 210 passes through the end wall, the wiring 210 also passes through an opening through the end cap 118. In some other examples, the first sensor(s) 124 do not utilize strain gauges, but detect changes in capacitance, changes to light properties, or changes to other properties in response to a change in position of the movable barrier 122. The first sensor(s) 124 are calibrated to one or more reference pressures so that the electrical signals sent through the wiring 210 to the air data computer correspond to impact pressure on the movable barrier 122 caused by air entering the inlet port 128.

FIG. 3 depicts a cross-sectional representation of a second example of a pitot system, such as the pitot system 102 of FIG. 1. The tip section 134 of the body 116 of the pitot system 102 of FIG. 3 includes a hemispherical tip with the inlet port 128. The hermetically sealed chamber 120 is positioned in the body 116 and secured to the tip section 134 by the end cap 118.

The movable barrier 122 is a rigid member (e.g., a piston) configured to slide in the hermetically sealed chamber 120 while maintaining a hermetic seal that prevents air that enters the pitot system 102 through the inlet port 128 from passing the movable barrier 122 into the hermetically sealed chamber 120. The first sensor 124 includes a spring 302 coupled at a first end to the movable barrier 122, a dampener 304 coupled at a first end to the movable barrier 122, and a force transducer 306 coupled to a second end of the spring 302 and a second end of the dampener 304. One or more supports 308 fix the position of the force transducer 306 in the hermetically sealed chamber 120. The spring constant of the spring 302 and the damping coefficient of the dampener 304 are chosen so that the movable barrier 122 does not oscillate responsive to changes in impact pressure. The force transducer 306 is calibrated to produce an output that corresponds to the impact pressure applied to the movable barrier 122.

During flight of the aircraft that includes the pitot system 102, air entering the pitot system 102 through the inlet port 128 provides impact pressure against the movable barrier 122. When the impact pressure increases due to an increase in airspeed, the movable barrier 122 moves toward the force transducer 306 to compress the spring 302 and the dampener 304. When the impact pressure decreases due to a decrease in airspeed, the spring 302 forces the movable barrier toward the inlet port 128 and the dampener 304 expands. Wiring 310 coupled to the force transducer 306 provides power to the force transducer 306 and carries signal(s), which correspond to the first signal(s) 130 of FIG. 1) from the force transducer 306 to the corresponding air data computer. In some examples, the wiring 310 passes through and is sealed to an end wall of the hermetically sealed chamber 120. The wiring 310 also passes through the end cap 118, as depicted in FIG. 3. In some other examples, the wiring 310 passes through and is sealed to a side wall of the hermetically sealed chamber 120. The wiring also passes through an outer wall of the body 116.

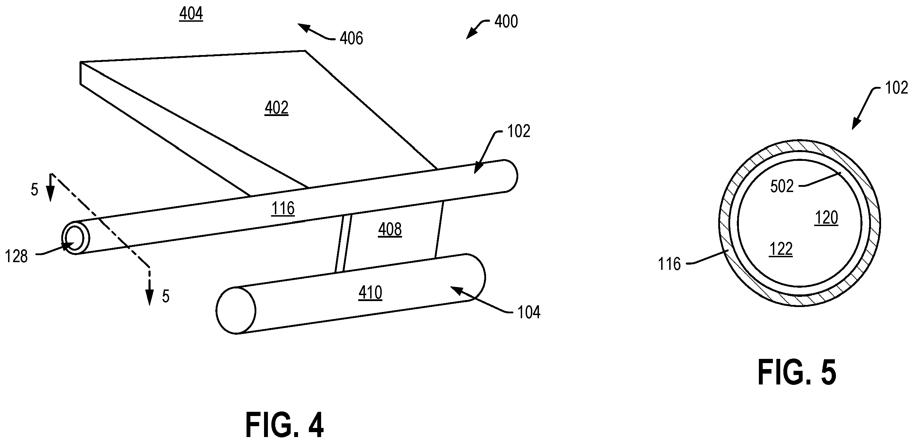

FIG. 4 depicts a perspective representation of an example of a pitot-static instrument 400. The pitot-static instrument 400 includes a pitot system 102 coupled by a first nacelle 402 to a fuselage 404 of an aircraft 406. Components of the pitot-static instrument 400 (e.g., the hermetically sealed chamber 120, the exit port(s) 144, the first sensor(s) 124, the second sensor(s) 142, the static port(s) 140, air data computer(s) 106, etc., of FIG. 1) not visible from the sight vantage point for the pitot-static instrument 400 are not shown in FIG. 4 and are not provided reference numbers in the following description. Wiring of the pitot system 102 passes from the aircraft 406 to the pitot system 102 through an interior of the first nacelle 402. The wiring provides power to one or more heaters of the pitot system 102, power to the first sensor(s) of the pitot system 102 and conveys first signal(s) generated by the first sensor(s) to a corresponding air data computer.

The pitot-static instrument 400 includes a static pressure system 104 offset a distance from the pitot system 102 by a second nacelle 408. Wiring for the static pressure system 104 and conduit(s) that couple an exit port of a body 410 of the static pressure system 104 to one or more second sensors of the static pressure system 104 pass through interiors of the second nacelle 408 and the first nacelle 402 into the aircraft 406. Static port(s) in a body 410 of the static pressure system 104 allow air at the static pressure to enter the body 410. Wiring of the static pressure system 104 provides power to heater(s) that inhibit icing over of the static port(s).

FIG. 5 depicts a cross-sectional representation of the pitot system 102 of FIG. 4 taken substantially along the cutting plane 5-5 of FIG. 4. The pitot system 102 includes the body 116, a wall 502 of the hermetically sealed chamber 120, and the movable barrier 122 of the hermetically sealed chamber 120. The inlet port 128 (shown in FIG. 4) is large compared to the size of the movable barrier 122. A ratio of an area of the inlet port 128 to the area of the movable barrier 122 is greater than 0.5, greater than 0.75, greater than 0.9, or greater than 0.95.

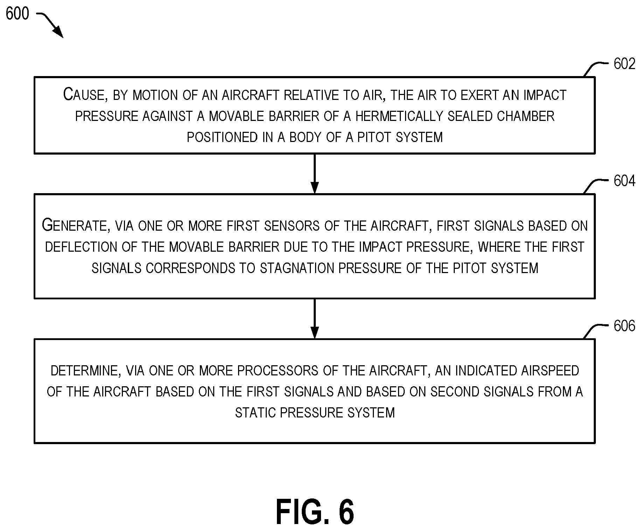

FIG. 6 is a flowchart of an example of a method 600 of use of a pitot-static instrument to determine airspeed for an aircraft. The method 600 may be performed by the aircraft 100 of FIG. 1. The method 600, at block 602, includes causing, by motion of an aircraft relative to air, the air to exert an impact pressure against a movable barrier of a hermetically sealed chamber positioned in a body of a pitot system. For example, during flight of the aircraft 100, motion of the aircraft 100 relative to air causes air to exert impact pressure against the movable barrier 122 of the hermetically sealed chamber 120 positioned in the body 116 of the pitot system 102.

The method 600, at block 604, includes generating, via one or more first sensors of the aircraft, first signals based on deflection of the movable barrier due to the impact pressure. The first signals correspond to stagnation pressure of the pitot system. For example, the first sensor(s) 124 generate the first signals 130 based on deflection of the movable barrier 122. The signals are provided to a corresponding air data computer 106.

The method 600, at block 606, also includes determining, via one or more processors of the aircraft, an indicated airspeed of the aircraft based on the first signals and based on second signals from a static pressure system. For example, the processor(s) 156 of the air data computer 106 process the first signals 130 received from the pitot system 102 and second signals 132 received from one of the static pressure system(s) 104 to determine the indicated airspeed of the aircraft 100. The one or more processors 156 determine the indicated airspeed based on Equation 1 presented above. The stagnation pressure is determined based on the first signals 130, the static pressure is determined based on the second signals 132, and a value for the density of air is utilized. If the airspeed is near, at, or above the speed of sound, the processors apply known corrections to Equation 1. In addition to determining the indicated airspeed, the processor(s) 156 can determine other airspeeds (e.g., the true airspeed) based on data received by the sensors 154.

In addition, the method 600 includes providing a generated stagnation pressure to a differential pressure sensor 152 of an airspeed indicator 112 when flight computer(s) 108 indicate that a conventional pitot tube coupled to the airspeed indicator is providing anomalous pressures to the airspeed indicator. For example, the method 600 includes providing a signal indicating a target stagnation pressure determined from the first signals 130 to a controller 168 of the aircraft 100. The method 600 includes receiving, at the controller 168, pressure signals indicating actual pressure in one or more conduits 160B, 160D connected to the airspeed indicator 112 from a pressure transducer 170. The method also includes sending control signals from the controller 168 to a pressure source 166 that cause the pressure source 166 to adjust the pressure in the one or more conduits 160B, 160D so that the actual pressure in the one or more conduits 160B, 160D approaches or equals the target pressure. Providing the generated stagnation pressure to the airspeed indicator 112 enables an indicated airspeed provided via a gauge of the airspeed indicator to correspond to the indicated airspeed provided by the air data computer(s) 106 to one or more display devices 158. Having corresponding airspeeds may avoid confusion if one of the pilots of the aircraft 100 looks at the indicated airspeed provided by the airspeed indicator 112 that receives stagnation pressure from a faulty conventional pitot tube 110.

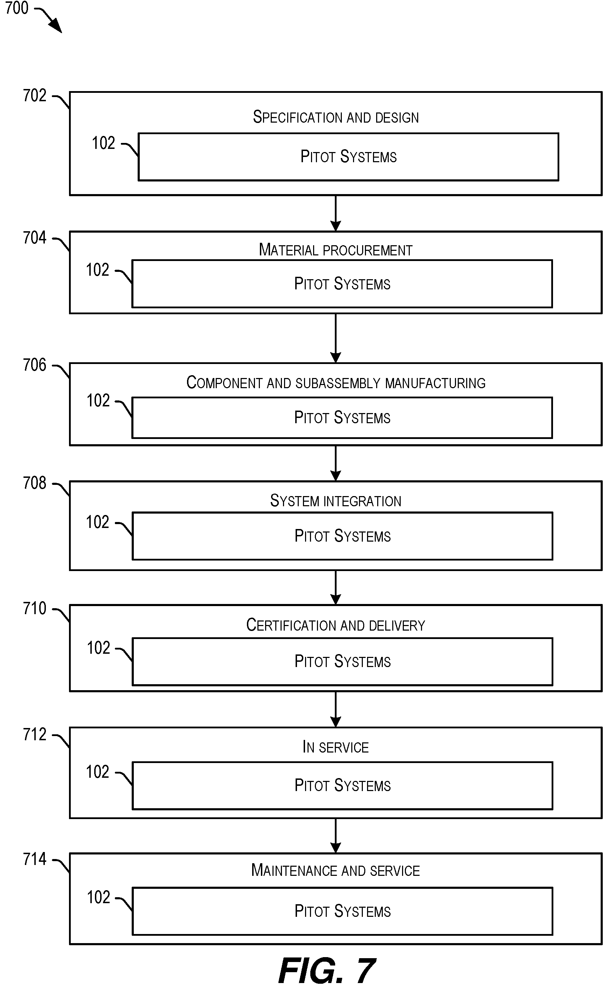

FIG. 7 is a flowchart illustrating an example 700 of a life cycle of an aircraft that includes pitot-static instruments, where one or more of the pitot-static instruments include the pitot system 102 of FIG. 1. During pre-production, the exemplary method 700 includes, at block 702, specification and design of the aircraft. During specification and design of the aircraft, the method 700 may include specification and design of the pitot systems 102. At block 704, the method 700 includes material procurement, which may include procuring materials for the pitot systems 102.

During production, the method 700 includes, at block 706, component and subassembly manufacturing and, at block 708, system integration of the aircraft. For example, the method 700 may include component and subassembly manufacturing of the pitot systems 102 and system integration of the pitot systems 102. At block 710, the method 700 includes certification and delivery of the aircraft and, at block 712, placing the aircraft in service. Certification and delivery may include certification of the pitot systems 102 to place the pitot systems 102 in service. While in service by a customer, the aircraft may be scheduled for routine maintenance and service (which may also include modification, reconfiguration, refurbishment, and so on). At block 714, the method 700 includes performing maintenance and service on the aircraft, which may include performing maintenance and service on the pitot systems 102.

Each of the processes of the method 700 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

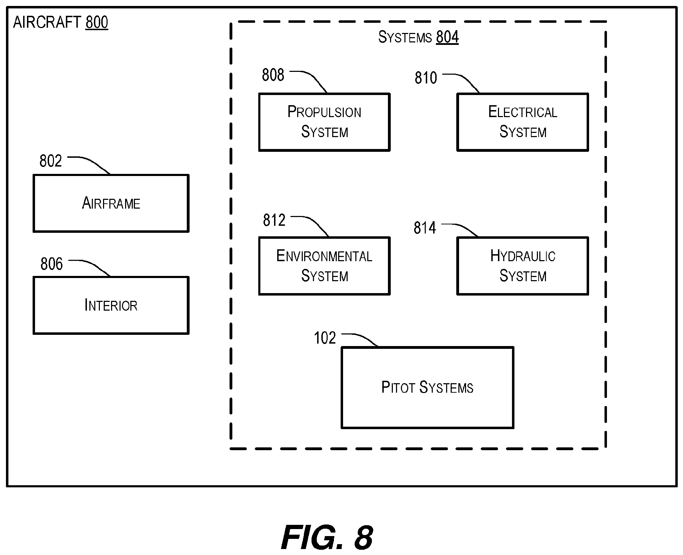

Examples of the disclosure can be described in the context of an example of an aircraft 800 as shown in FIG. 8. In the example of FIG. 8, the aircraft 800 includes an airframe 802 with a plurality of systems 804 and an interior 806. Examples of the plurality of systems 804 include one or more of a propulsion system 808, an electrical system 810, an environmental system 812, a hydraulic system 814, and the pitot systems 102. Any number of other systems may be included. In the example of FIG. 8, the aircraft 800 includes the pitot systems 102 as described in FIGS. 1-6. Portions of the pitot systems 102 are coupled to the airframe 802. Also, the pitot systems 102 utilizes portions of the electrical system 810, the hydraulic system 814, or both. For example, the first sensor(s) 124, the heater(s) 126, 146, the air data computer(s) z06, the flight computer(s) 108 may be powered by the electrical system 810 and the actuator 164 may be driven by the hydraulic system 814.

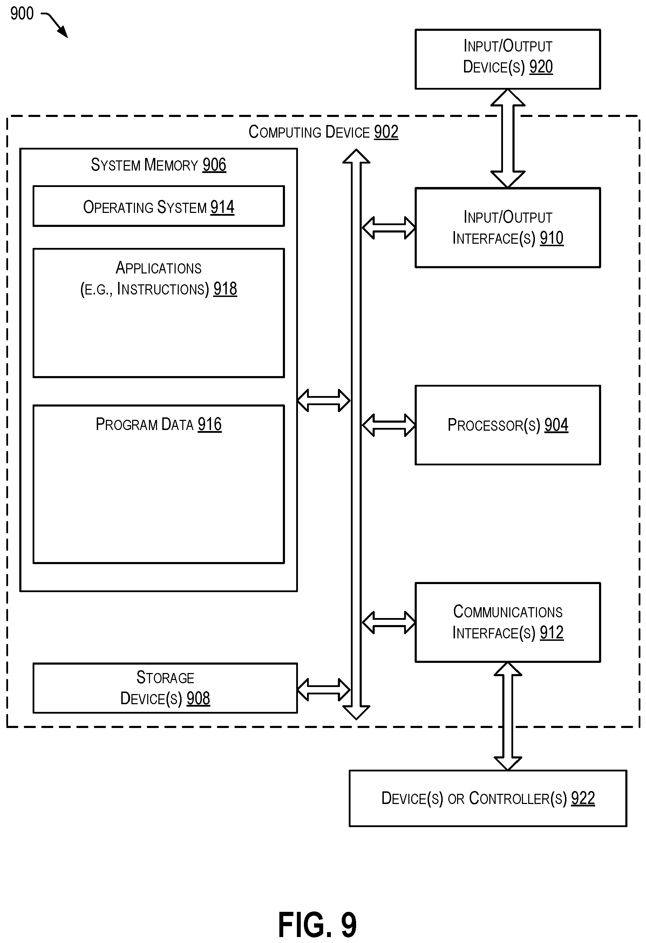

FIG. 9 is a block diagram of a computing environment 900 including a computing device 902 configured to support features of computer-implemented methods and computer-executable program instructions (or code) according to the present disclosure. For example, the computing device 902, or portions thereof, is configured to execute instructions to initiate, perform, or control one or more operations described with reference to FIGS. 1-6. Each of the air data computers 106, the flight computer(s) 108, the controller 168, and the sensor(s) 154 of FIG. 1 may include one or more of the computing devices 902.

The computing device 902 includes one or more processors 904. The processor(s) 904 are configured to communicate with system memory 906, one or more storage devices 908, one or more input/output interfaces 910, one or more communications interfaces 912, or any combination thereof. The system memory 906 includes volatile memory devices (e.g., random access memory (RAM) devices), nonvolatile memory devices (e.g., read-only memory (ROM) devices, programmable read-only memory, and flash memory), or both. The system memory 906 stores an operating system 914, which may include a basic input/output system for booting the computing device 902 as well as a full operating system to enable the computing device 902 to interact with users, other programs, and other devices. The system memory 906 stores program data 916, such as any data used or generated by the pitot systems 102, the air data computers 106, the flight computer(s) 108, the controller 168, or a combination thereof, as described with reference to FIGS. 1-6. For example, the program data 916 of the flight computer(s) 108 stores rules used to determine whether one or more of the pitot system(s) 102, the static pressure system(s) 104, and the conventional pitot tube(s) 110 are providing anomalous output and stores historical operation data used in application of the rules.

The system memory 906 includes one or more applications 918 (e.g., sets of instructions) executable by the processor(s) 904. As an example, the one or more applications 918 include instructions executable by the processor(s) 904 to initiate, control, or perform one or more operations described with reference to FIGS. 1-6. To illustrate, the computing device 902 of the flight computer(s) 108 includes one or more applications 918 that include instructions to perform actions in response to application of the rules stored in the program data 916 indicating that one or more of the pitot system(s) 102, the static pressure system(s) 104, and the conventional pitot tube(s) 110 are providing anomalous output.

In some examples, the system memory 906 includes a non-transitory, computer readable medium storing the instructions that, when executed by the processor(s) 904, cause the processor(s) 904 to initiate, perform, or control operations to determine airspeed for an aircraft.

The one or more storage devices 908 include nonvolatile storage devices, such as magnetic disks, optical disks, or flash memory devices. In some examples, the storage devices 908 include both removable and non-removable memory devices. The storage devices 908 are configured to store an operating system, images of operating systems, applications (e.g., one or more of the applications 918), and program data (e.g., the program data 916). In some examples, the system memory 906, the storage devices 908, or both, include tangible computer-readable media (e.g., one or more storage devices) and are not merely signals. In a some examples, one or more of the storage devices 908 are external to the computing device 902.

The one or more input/output interfaces 910 enable the computing device 902 to communicate with one or more input/output devices 920 to facilitate user interaction. For example, the one or more input/output interfaces 910 can include a display interface, an input interface, or both. For example, the input/output interface 910 is adapted to receive input from a user (e.g., a pilot), to receive input from another computing device, or a combination thereof. In some examples, the input/output interface 910 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some examples, the input/output device(s) 920 include one or more user interface devices and displays, including some combination of buttons, keyboards, pointing devices, instrument panel controls (e.g., dials, switches, slides, etc.), displays, speakers, microphones, touch screens, and other devices.

The processor(s) 904 are configured to communicate with devices or controllers 922 via the one or more communications interfaces 912. For example, the one or more communications interfaces 912 can include a network interface. The devices or controllers 922 can include, for example, the air data computer(s) 106, the flight computer(s) 108, the controller 168 of FIG. 1, other devices of the aircraft, or combinations thereof.

In some examples, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1-6. In some examples, part, or all of one or more of the operations or methods of FIGS. 1-6 may be implemented by one or more processors (e.g., one or more central processing units (CPUs), one or more graphics processing units (GPUs), one or more digital signal processors (DSPs)) executing instructions, by dedicated hardware circuitry, or any combination thereof.

The following present Examples:

According to Example 1, a pitot system includes a body including an inlet port and a hermetically sealed chamber positioned in the body, wherein the hermetically sealed chamber includes a movable barrier in fluid communication with the inlet port; and one or more first sensors configured to provide first signals, to a computer, based on deflection of the movable barrier due to impact pressure exerted against the movable barrier by fluid in the body, wherein the first signals correspond to a stagnation pressure of fluid that entered the body via the inlet port.

Example 2 includes the pitot system of Example 1, wherein the computer is configured to determine an indicated speed of the fluid relative to the body based on the first signals and second signals received by the computer from a static pressure system, and wherein the second signals correspond to static pressure.

Example 3 includes the pitot system of Example 2, wherein the static pressure system includes an annular space between the body and the hermetically sealed chamber, and wherein the annular space is configured to receive fluid at the static pressure through one or more static ports.

Example 4 includes the pitot system of Example 2, wherein the static pressure system is offset from the pitot system by a nacelle.

Example 5 includes the pitot system of any of Examples 1 to 4 and further includes one or more exit ports in the body configured to enable fluid entering the inlet port to exit the body.

Example 6 includes the pitot system of any of Examples 1 to 5 and further includes a pressure system configured to pressurize one or more conduits to a pressure corresponding to the stagnation pressure determined by the computer based on the first signals.

Example 7 includes the pitot system of Example 6 and further includes a controller configured to receive a target pressure corresponding to the first signals from the computer and receives signals corresponding to actual pressure in the one or more conduits from a pressure transducer, wherein the controller is further configured to provide control signals to a pressure source that cause the pressure source to adjust the pressure in the one or more conduits so that the actual pressure in the one or more conduits approaches or equals the target pressure.

Example 8 includes the pitot system of any of Examples 1 to 7, wherein a ratio of an area of the inlet port to an area of the movable barrier is greater than 0.9.

Example 9 includes the pitot system of any of Examples 1 to 8, wherein the movable barrier comprises a flexible member fixed to a wall of the hermetically sealed chamber at a first location.

Example 10 includes the pitot system of any of Examples 1 to 9, wherein the one or more first sensors comprise a spring positioned in the hermetically sealed chamber, wherein a first end of the spring is coupled to the movable barrier, and wherein a second end of the spring is coupled to a force transducer that generates the first signals.

Example 11 includes the pitot system of Example 10, wherein the movable barrier is a rigid member.

According to Example 12, an aircraft includes a fuselage; a first nacelle coupled to the fuselage; a pitot system coupled to the first nacelle, wherein the pitot system includes a body and a hermetically sealed chamber coupled to the body, wherein an inlet port in the body is in fluid communication with a movable barrier of the hermetically sealed chamber, and wherein one or more first sensors configured to generate first signals corresponding to impact pressure exerted on the movable barrier are coupled to the movable barrier; and a computer configured to receive the first signals from the one or more first sensors.

Example 13 includes the aircraft of Example 12, further includes a second nacelle coupled to the first nacelle; and a static pressure system coupled to the second nacelle.

Example 14 includes the aircraft of Example 13, wherein the static pressure system is configured to send, to the computer, second signals corresponding to static pressure.

Example 15 includes the aircraft of any of Examples 12 to 14 and further includes one or more conventional pitot tubes coupled to the fuselage, wherein the one or more conventional pitot tubes are configured to provide third signals corresponding to stagnation pressure to the computer or a second computer.

Example 16 includes the aircraft of any of Examples 12 to 15, wherein the one or more first sensors comprise a spring, a dampener, and a force transducer.

Example 17 includes the aircraft of any of Examples 12 to 16 and further includes a pressure system configured to pressurize one or more conduits to a pressure corresponding to a stagnation pressure determined by the computer based on the first signals.

According to Example 18, a method includes causing, by motion of an aircraft relative to air, the air to exert an impact pressure against a movable barrier of a hermetically sealed chamber positioned in a body of a pitot system; generating, via one or more first sensors of the aircraft, first signals based on deflection of the movable barrier due to the impact pressure, wherein the first signals correspond to stagnation pressure of the pitot system; and determining, via one or more processors of the aircraft, an indicated airspeed of the aircraft based on the first signals and based on second signals from a static pressure system.

Example 19 includes the method of Example 18, further includes providing, to a controller of the aircraft, a signal indicating a target stagnation pressure determined from the first signals; receiving, at the controller, pressure signals indicating actual pressure in one or more conduits; and sending control signals from the controller to a pressure source that cause the pressure source to adjust the pressure in the one or more conduits so that the actual pressure in the one or more conduits approaches or equals the target pressure.

Example 20 includes the method of Example 18 or Example 19, further includes determining, via the one or more processors, a flight condition of the aircraft based on the first signals; and causing display of the flight condition to a display device.

The illustrations of the examples described herein are intended to provide a general understanding of the structure of the various examples. The illustrations are not intended to serve as a complete description of all of the elements and features of apparatus and systems that utilize the structures or methods described herein. Many other examples may be apparent to those of skill in the art upon reviewing the disclosure. Other examples may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific examples shown. This disclosure is intended to cover any and all subsequent adaptations or variations of various examples. Combinations of the above examples, and other examples not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single example for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

**Claims**

1. A system comprising:
   a computer (106) and a pitot system (102), the pitot system comprising:

   a body (116) including an inlet port (128) and a hermetically sealed chamber (120) positioned in the body, wherein the hermetically sealed chamber includes a movable barrier (122) in fluid communication with the inlet port; and one or more first sensors (124) configured to provide first signals (130), to the computer (106), based on deflection of the movable barrier due to impact pressure exerted against the movable barrier by fluid in the body, wherein the first signals correspond to a stagnation pressure of fluid that entered the body via the inlet port.

2. The system of claim 1, further comprising a static pressure system, and wherein the computer is configured to determine an indicated speed of the fluid relative to the body based on the first signals and based on second signals received by the computer from the static pressure system, wherein the second signals correspond to static pressure.

3. The system of claim 2, wherein the pitot system further includes an annular space (202) between the body and the hermetically sealed chamber, and wherein the annular space is configured to receive fluid at the static pressure through one or more static ports (140).

4. The system of any preceding claim, wherein the one or more first sensors comprise a spring (302), a dampener (304), and a force transducer (306).

5. The system of any preceding claim, wherein the pitot system further comprises one or more exit ports (144) in the body configured to enable fluid entering the inlet port to exit the body.

6. The system of any preceding claim, further comprising a pressure system (114) configured to pressurize one or more conduits (160B, 160D) to a pressure corresponding to the stagnation pressure determined by the computer based on the first signals, and optionally,

wherein the system further comprises a pressure transducer, and wherein the pressure system comprises a controller (168) and a pressure source (166),
wherein the controller is configured to receive a target pressure corresponding to the first signals from the computer and is configured to receive signals corresponding to actual pressure in the one or more conduits from the pressure transducer, and
wherein the controller is further configured to provide control signals to the pressure source (166) that cause the pressure source to adjust the pressure in the one or more conduits so that the actual pressure in the one or more conduits approaches or equals the target pressure.

7. The system of any preceding claim, wherein a ratio of an area of the inlet port to an area of the movable barrier is greater than 0.9.

8. The system of any preceding claim, wherein the movable barrier comprises a flexible member fixed to a wall of the hermetically sealed chamber at a first location.

9. The system of any of claims 1 - 7, wherein the one or more first sensors comprise a spring (302) positioned in the hermetically sealed chamber, wherein a first end of the spring is coupled to the movable barrier, and wherein a second end of the spring is coupled to a force transducer (306) that generates the first signals, and optionally, wherein the movable barrier is a rigid member.

10. An aircraft (406) comprising:

a fuselage (404);
a first nacelle (402) coupled to the fuselage; and
the system of any preceding claim, wherein the pitot system (102) is coupled to the first nacelle, and wherein the computer (106) is configured to receive the first signals from the one or more first sensors.

11. The aircraft of claim 10, when the aircraft comprises the system of claim 2 or any of claims 3 to 9 when dependent upon claim 2, wherein the aircraft further comprises a second nacelle (408) coupled to the first nacelle, wherein the static pressure system (104) is coupled to the second nacelle, and optionally, wherein the static pressure system is offset from the pitot system by the second nacelle (408).

12. The aircraft of claim 10 or claim 11, further comprising one or more pitot tubes (110) coupled to the fuselage, wherein the one or more pitot tubes (110) are configured to provide third signals corresponding to stagnation pressure to the computer or a second computer.

13. A method comprising:

causing, by motion of an aircraft (100) relative to air, the air to exert an impact pressure against a movable barrier (122) of a hermetically sealed chamber (120) positioned in a body (116) of a pitot system (102);
generating, via one or more first sensors (124) of the aircraft, first signals (130) based on deflection of the movable barrier due to the impact pressure, wherein the first signals correspond to stagnation pressure of the pitot system;

and
determining, via one or more processors (156) of the aircraft, an indicated airspeed of the aircraft based on the first signals and based on second signals (132) from a static pressure system (104).

14. The method of claim 13, further comprising:

providing, to a controller (168) of the aircraft, a signal indicating a target stagnation pressure determined from the first signals;
receiving, at the controller, pressure signals indicating actual pressure in one or more conduits (160B, 160D); and
sending control signals from the controller to a pressure source (166) that cause the pressure source to adjust the pressure in the one or more conduits so that the actual pressure in the one or more conduits approaches or equals the target stagnation pressure.

15. The method of claim 13 or claim 14, further comprising:

determining, via the one or more processors, a flight condition of the aircraft based on the first signals; and
causing display of the flight condition to a display device (158).

FIG. 1

FIRST
LOCATION 208    SUPPORT 138    ANNULAR SPACE 202    WALL 206    EXIT PORT 204    102

MOVABLE
BARRIER 122

INLET
PORT 128

TIP SECTION
134

FIRST SENSOR(S) 124

WIRING 210

END CAP 118

EXIT PORTS 144    STATIC PORT 136    BODY 116    HERMETICALLY SEALED
CHAMBER 120

**FIG. 2**

102

TIP SECTION
134

INLET
PORT 128

BODY 116    FORCE TRANSDUCER 306    SUPPORT 308    HERMETICALLY SEALED
CHAMBER 120

END CAP 118

FIRST SENSOR 124

WIRING 310

MOVABLE
BARRIER 122    DAMPENER 304    SPRING 302

**FIG. 3**

EP 4 697 029 A1

FIG. 4

FIG. 5

EP 4 697 029 A1

600

602

CAUSE, BY MOTION OF AN AIRCRAFT RELATIVE TO AIR, THE AIR TO EXERT AN IMPACT
PRESSURE AGAINST A MOVABLE BARRIER OF A HERMETICALLY SEALED CHAMBER
POSITIONED IN A BODY OF A PITOT SYSTEM

604

GENERATE, VIA ONE OR MORE FIRST SENSORS OF THE AIRCRAFT, FIRST SIGNALS BASED ON
DEFLECTION OF THE MOVABLE BARRIER DUE TO THE IMPACT PRESSURE, WHERE THE FIRST
SIGNALS CORRESPONDS TO STAGNATION PRESSURE OF THE PITOT SYSTEM

606

DETERMINE, VIA ONE OR MORE PROCESSORS OF THE AIRCRAFT, AN INDICATED AIRSPEED
OF THE AIRCRAFT BASED ON THE FIRST SIGNALS AND BASED ON SECOND SIGNALS FROM A
STATIC PRESSURE SYSTEM

# FIG. 6

700

702 SPECIFICATION AND DESIGN

102 PITOT SYSTEMS

704 MATERIAL PROCUREMENT

102 PITOT SYSTEMS

706 COMPONENT AND SUBASSEMBLY MANUFACTURING

102 PITOT SYSTEMS

708 SYSTEM INTEGRATION

102 PITOT SYSTEMS

710 CERTIFICATION AND DELIVERY

102 PITOT SYSTEMS

712 IN SERVICE

102 PITOT SYSTEMS

714 MAINTENANCE AND SERVICE

102 PITOT SYSTEMS

*FIG. 7*

AIRCRAFT <u>800</u>

802

AIRFRAME

806

INTERIOR

SYSTEMS <u>804</u>

808

PROPULSION SYSTEM

810

ELECTRICAL SYSTEM

812

ENVIRONMENTAL SYSTEM

814

HYDRAULIC SYSTEM

102

PITOT SYSTEMS

*FIG. 8*

900

INPUT/OUTPUT
DEVICE(S) 920

COMPUTING DEVICE 902

SYSTEM MEMORY 906

OPERATING SYSTEM 914

APPLICATIONS
(E.G., INSTRUCTIONS) 918

PROGRAM DATA 916

INPUT/OUTPUT
INTERFACE(S) 910

PROCESSOR(S) 904

COMMUNICATIONS
INTERFACE(S) 912

STORAGE
DEVICE(S) 908

DEVICE(S) OR CONTROLLER(S) 922

FIG. 9

Europäisches
Patentamt

European
Patent Office

Office européen
des brevets

## EUROPEAN SEARCH REPORT

**Application Number**

EP 25 18 4143

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/191823 A1 (SEIDEL GREG ALLEN [US] ET AL) 18 June 2020 (2020-06-18) | 1,2,5,7, 8,10-13, 15 | INV. G01P5/165 G01P5/16 |
| Y | * paragraphs [0012] - [0022], [0031]; figures 1-6 * ----- | 3,4,6,9, 14 | G01P5/02 B64D43/02 |
| Y | US 5 438 880 A (WASHBURN S JOHN [US]) 8 August 1995 (1995-08-08) * column 3 * ----- | 3 | ADD. G01P5/04 |
| Y | US 2019/242924 A1 (LANG CHARLES [US] ET AL) 8 August 2019 (2019-08-08) * paragraph [0050] * ----- | 4,9 | |
| Y | US 2014/257745 A1 (SCHEGERIN ROBERT [FR]) 11 September 2014 (2014-09-11) * paragraphs [0152], [0153]; figures 1-10 * ----- | 6,14 | |
| A | US 6 038 932 A (WANDEL HERMANN [DE] ET AL) 21 March 2000 (2000-03-21) * the whole document * ----- | 1-15 | |

**TECHNICAL FIELDS SEARCHED (IPC)**

G01P
B60V
B64D

The present search report has been drawn up for all claims

| Place of search | Date of completion of the search | Examiner |
|---|---|---|
| Munich | 21 November 2025 | Schwarz, Cornelia |

EPO FORM 1503 03.82 (P04C01)

## ANNEX TO THE EUROPEAN SEARCH REPORT
## ON EUROPEAN PATENT APPLICATION NO.

EP 25 18 4143

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | | Publication date | Patent family member(s) | | Publication date |
|---|---|---|---|---|---|
| US 2020191823 | A1 | 18-06-2020 | BR 102019023458 | A2 | 23-06-2020 |
| | | | CA 3055853 | A1 | 14-06-2020 |
| | | | CN 111323161 | A | 23-06-2020 |
| | | | EP 3667331 | A1 | 17-06-2020 |
| | | | JP 2020095023 | A | 18-06-2020 |
| | | | US 2020191823 | A1 | 18-06-2020 |
| US 5438880 | A | 08-08-1995 | NONE | | |
| US 2019242924 | A1 | 08-08-2019 | CN 111699133 | A | 22-09-2020 |
| | | | EP 3749577 | A1 | 16-12-2020 |
| | | | US 2019242924 | A1 | 08-08-2019 |
| | | | WO 2019157185 | A1 | 15-08-2019 |
| US 2014257745 | A1 | 11-09-2014 | EP 2739981 | A1 | 11-06-2014 |
| | | | FR 2978829 | A1 | 08-02-2013 |
| | | | US 2014257745 | A1 | 11-09-2014 |
| | | | WO 2013017746 | A1 | 07-02-2013 |
| US 6038932 | A | 21-03-2000 | DE 19640606 | C1 | 11-09-1997 |
| | | | EP 0834743 | A2 | 08-04-1998 |
| | | | RU 2139545 | C1 | 10-10-1999 |
| | | | US 6038932 | A | 21-03-2000 |

EPO FORM P0459

For more details about this annex : see Official Journal of the European Patent Office, No. 12/82